# EUROPÄISCHE PATENTSCHRIFT

(11) **EP 2 060 514 B1**
(45) Veröffentlichungstag und Bekanntmachung des Hinweises auf die Patenterteilung: **28.12.2011**
(21) Anmeldenummer: 08105558.4
(22) Anmeldetag: 13.10.2008
(51) Int. Cl.: B65G 47/244, B65G 21/20

(54) **Vorrichtung zum Drehen flacher Gegenstände, insbesondere von Faltschachtelzuschnitten**
Device to turn flat objects, especially flat box cuts
Dispositif destiné à faire tourner des objets plats, notamment des sections de boîte pliante

(30) Priorität: 16.11.2007 DE 102007054822
(43) Veröffentlichungstag der Anmeldung: 20.05.2009
(73) Patentinhaber: Heidelberger Druckmaschinen AG, 69115 Heidelberg (DE)
(72) Erfinder: Jansen, Frank, 47807 Krefeld (DE)

(56) Entgegenhaltungen:
- EP-A- 1 345 827
- EP-A- 1 593 481
- EP-A- 1 666 386
- EP-B- 0 881 173
- US-A- 5 383 760

## Beschreibung

Die Erfindung betrifft eine Vorrichtung zum Drehen flacher Gegenstände, insbesondere von Faltschachtelzuschnitten, gemäß dem Oberbegriff von Anspruch 1.

Bei der Herstellung von Faltschachteln aus Zuschnitten in Faltschachtel-Klebemaschinen müssen - je nach Schachtelform - verschiedene mit einem Klebestreifen versehene Faltlappen um 180° gefaltet und mit anderen Zuschnittsteilen verklebt werden. Da die Faltung beim Durchlauf mit hohen Geschwindigkeiten durch die Maschine erfolgt, werden üblicherweise seitlich angeordnete Faltelemente verwendet, von denen die Faltlappen an den Seiten zur Mitte hin umgelegt werden. Die zugehörige Rilllinie der seitlichen Faltlappen verläuft daher parallel zur Förderrichtung.

Müssen bei bestimmten Schachtelformen Zuschnittsteile um zwei zueinander senkrechte Rilllinien gefaltet werden, beispielsweise neben den Seitenlaschen auch Teile die den Deckel der Schachtel bilden, werden üblicherweise die Zuschnitte zweimal durch die Maschine gefördert; beim zweiten Mal um 90° gedreht, damit sich die zu faltenden Teile jeweils an der Maschinenlängsseite befinden.

Damit derartige Schachteln mit nur einem Durchlauf durch die Maschine vollständig bearbeitet werden können, ist es bekannt, die Schachteln beim Durchlauf vor der zweiten Faltung um 90° zu drehen. Die EP 0 881 173 B1 beschreibt eine Vorrichtung der gattungsgemäßen Art, die zum Drehen der Faltschachteln um bis zu 180° zwei Förderstrecken nebeneinander entlang der Bahn der Gegenstände enthält, deren Geschwindigkeit getrennt einstellbar ist. Die Gegenstände liegen auf beiden Förderstrecken auf, so dass sie bei unterschiedlicher Geschwindigkeit der beiden Förderstrecken um eine Achse senkrecht zur Förderebene gedreht werden. Damit die Gegenstände jeweils die Geschwindigkeit der beiden Förderer annehmen, ist unterhalb der Förderelemente eine Saugeinrichtung angeordnet, die mittels Unterdruck die Reibungskraft zwischen den Förderelementen und den Gegenständen erhöht.

Die Förderer sind hierbei in einem Gestell gelagert. Das Gestell kann bezüglich des Maschinenrahmens querverstellt werden, um die Schachtelzuschnitte derart auszurichten, dass sie bezüglich der Mittelachse der weiteren stromabwärts sich befindenden Bearbeitungsstationen der Faltschachtelklebemaschine zentriert sind.

Aus der EP 1 345 827 B1 ist eine Vorrichtung zum Drehen flacher Gegenstände bekannt, bei der die Förderelemente nur eine einzige Förderstrecke bilden. An einer Seite neben der Förderstrecke verläuft eine im Wesentlichen mit der Förderebene fluchtende Gleitfläche, in der ein taktweise aktivierbares Bremselement angeordnet ist. Mit dem Bremselement ist ein über die Gleitfläche gleitendes Teil des Zuschnitts abbremsbar. Da die übrigen Teile des Zuschnitts weitergefördert werden, wird eine Drehbewegung ausgelöst.

Aus der EP 1 593 481 A1 ist eine Vorrichtung zum Drehen flacher Gegenstände bekannt mit unverrückbar angeordneten Transportmitteln für die Zuschnitte und mit einer Steuerung, welche die Stellantriebe der vor und hinter der Drehstation vorgesehenen quer positionierbaren Maschinenkomponenten in Abhängigkeit vom herzustellenden Typ der Faltschachtel steuert.

Der Erfindung liegt die Aufgabe zugrunde, eine alternative Vorrichtung der gattungsgemäßen Art zu schaffen, mit der unterschiedliche Schachtelzuschnitte gedreht werden können und gleichzeitig die Rüstzeiten für Einstellungen an der Maschine reduziert werden können.

Gelöst wird diese Aufgabe durch eine Vorrichtung gemäß dem kennzeichnenden Teil von Anspruch 1.

Die erfmdungsgemäße Vorrichtung zum Drehen flacher Gegenstände weist Förderelemente auf, die mindestens zwei luftdurchlässige Förderstrecken bilden. Auf diesen Förderstrecken werden die Gegenstände flachliegend gefördert. Die Förderelemente sind hierbei in einem Rahmen gelagert. Eine jede Förderstrecke weist je einen separaten Antrieb für die Förderelemente auf. Der Rahmen mit den Förderelementen ist um einen Drehpunkt im Auslaufbereich der Vorrichtung schwenkbar bezüglich eines Maschinengestells gelagert. Dies ermöglicht es, die Förderbahnen des Drehmoduls im Einlaufbereich der Zuschnitte zu verstellen, um den Drehvorgang der Zuschnitte zu begünstigen. Vorteilhafterweise bleibt hierbei die Transportbahn im Auslauf des Drehmoduls unverändert. Deshalb müssen keine Positionskorrekturen der Transportelemente der nachfolgenden Bearbeitungsstationen vorgenommen werden.

In einer bevorzugten Ausführungsform werden die luftdurchlässigen Förderstrecken durch Saugbänder gebildet.

In einer alternativen Ausführungsform werden die luftdurchlässigen Förderstrecken durch Förderrollen gebildet.

In einer besonders bevorzugten Ausführungsform hat jede Förderstrecke ihren eigenen Antrieb ihrer jeweiligen Förderelemente.

In einer weiteren Ausführungsform wird die Verschwenkung des Rahmens um den Drehpunkt automatisch über eine Steuerung und einen Antrieb bewirkt. Dies ermöglicht eine besonders leichte Einstellbarkeit in Abhängigkeit von der Zuschnittform.

Weitere Vorteile der Erfindung ergeben sich aus der nachfolgenden Beschreibung von Ausführungsbeispielen anhand der Figuren 1 bis 3 der beigefügten Zeichnungen.

Hierbei zeigen:
- Fig. 1: eine perspektivische Darstellung einer Ausführungsform der erfindungsgemäßen Vorrichtung
- Fig. 2: eine perspektivische Darstellung einer alternativen Ausführungsform der erfindungsgemäßen Vorrichtung
- Fig. 3: eine schematische Darstellung einer Ausführungsform der erfindungsgemäßen Vorrichtung in verschiedenen Arbeitsstellungen

Die Vorrichtung ist Bestandteil einer Faltschachtelklebemaschine zur Herstellung von Faltschachteln aus Zuschnitten, wie sie beispielsweise in der DE 198 28 820-A beschrieben ist. Faltschachtelklebemaschinen enthalten bekannterweise mehrere Bearbeitungsstationen, die von den Zuschnitten/Schachteln nacheinander durchlaufen werden: Zu Beginn einen Einleger, der die zu verarbeitenden Zuschnitte mit hoher Geschwindigkeit aus einem Stapel nacheinander abzieht, anschließend einen sogenannten Vorbrecher, um die Rilllinien durch Knicken um 180° weich und geschmeidig zu machen und danach zumindest eine Faltstation, an deren Anfang zunächst ein Klebstoff streifenförmig auf die die verklebenden Faltlappen aufgetragen wird und anschließend die seitlichen Faltlappen zur Mitte hin gefaltet werden. Die flachliegend gefalteten Faltschachteln werden anschließend durch eine Sammel- und Presseinrichtung gerührt, in der sie zum Abbinden des Klebstoffs gepresst werden.

Die Vorrichtung nach der Erfindung ist bevorzugt in eine Faltschachtelklebemaschine mit zwei Faltstationen integriert und vor der zweiten Faltstation angeordnet. Die aus der ersten Faltstation mit bereits gefalteten Seitenlappen auslaufenden Zuschnitte werden in der Vorrichtung um eine Achse senkrecht zur Förderebene gedreht, damit in der nachfolgenden Faltstation sich andere Faltlappen seitlich befinden und so mittels der üblichen Faltelemente gefaltet werden können. Im vorliegenden Ausführungsbeispiel werden die Zuschnitte um 90° gedreht, um Deckel- und/oder Bodenlappen in eine seitliche Position zu drehen, in der die zugehörige Rilllinie parallel zur Förderrichtung verläuft.

Der Winkel, um den gedreht wird, hängt von dem zu verarbeitenden Zuschnitt ab. Es wird um den Winkel gedreht, mit dem die Rilllinien der Faltlappen zueinander geneigt verlaufen, um die Rilllinie des nächsten zu faltenden Faltlappens parallel zur Förderrichtung auszurichten; beispielsweise erfolgt bei der Herstellung von Sechseck-Schachteln eine Drehung um 60°.

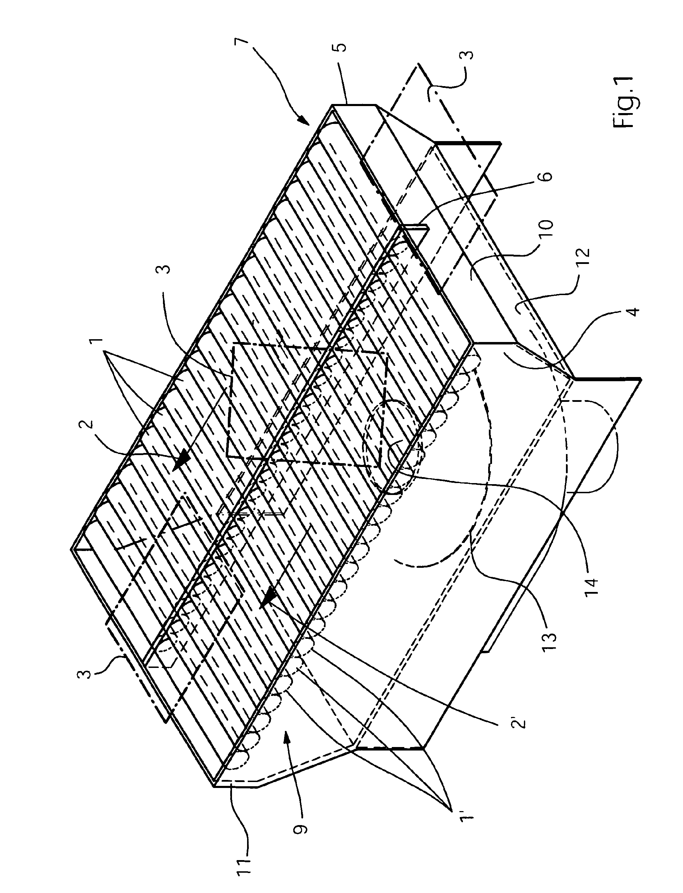

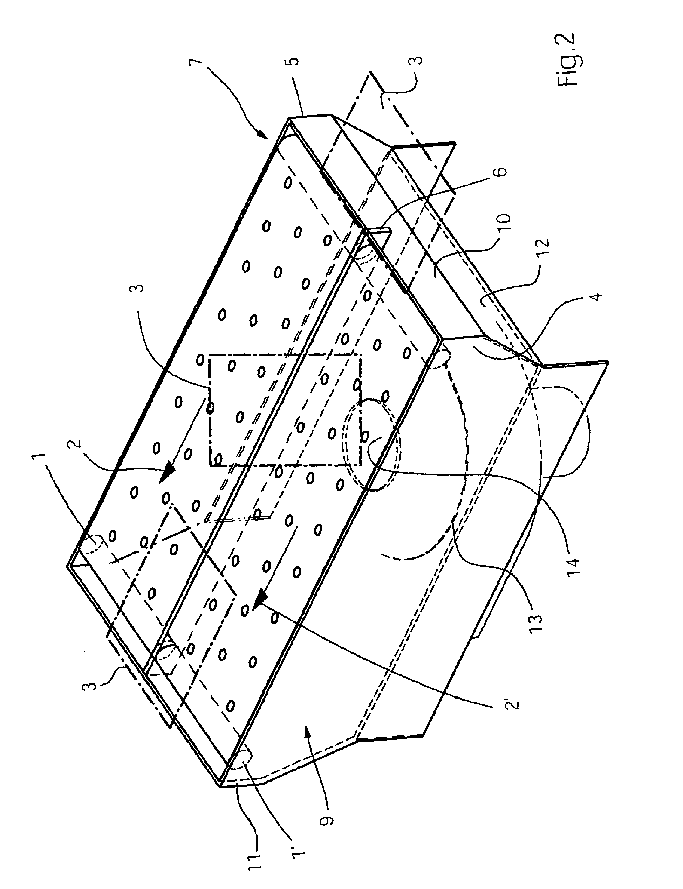

In der bevorzugten Ausführungsform nach Fig. 1 dienen zwei Reihen von Rollen 1 und 1' als Förderelemente, die zwei Förderstrecken 2, 2' bilden, auf denen die Zuschnitte 3 flach liegend gefördert werden (in Figur 1 von rechts nach links). Die Rollen 1,1' sind an ihren Enden jeweils in seitlichen Rahmenteilen 4, 5, 6 eines Rahmens 7 gelagert und über bekannte Antriebsmittel mit einem nicht dargestellten Drehantrieb verbunden. Die Rollen 1, 1' sind jeweils parallel und mit geringem Abstand voneinander angeordnet, so dass die von ihnen gebildeten Förderstrecken luftdurchlässig sind. Alternativ zu den Rollen 1, 1' können als Förderelemente auch endlose Saugbänder 8, 8' verwendet werden, wie in Fig. 2 dargestellt.

Der Raum unterhalb der Rollen 1, 1' bzw. Saugbänder 8, 8' ist als Saugkammer 9 > ausgebildet, die seitlich von den Rahmenteilen 4, 5 vorne und hinten von Rahmenteilen 10, 11 und oben von den luftdurchlässigen Förderstrecken und nach unten durch eine Bodenplatte 12 mit einer Öffnung 14 begrenzt wird. Die Saugkammer 9 ist über die Öffnung 14 in der Bodenplatte 12 an ein Sauggebläse 13 angeschlossen, das die variable Einstellung eines Unterdrucks ermöglicht. Beim Anlegen eines Unterdrucks in der Saugkammer 9 werden die auf den Rollen 1, 1' oder Saugbänder 8, 8' geförderten Zuschnitte 3 gegen die Rollen 1, 1' bzw. Saugbänder 8, 8' gepresst, um die Reibung zwischen den Rollen 1, 1' bzw. Saugbänder 8, 8' und den Zuschnitten 3 zu erhöhen.

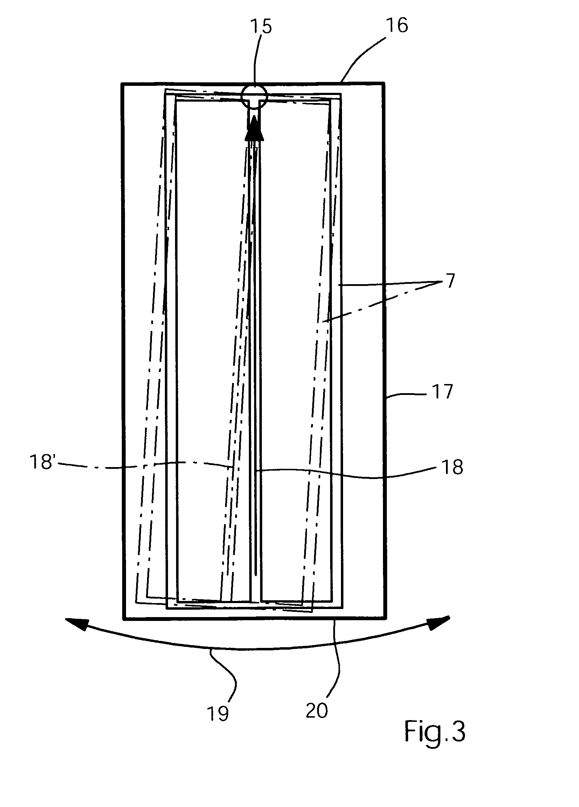

In der Fig. 3 ist schematisch die Schwenkbewegung des Rahmens 7 relativ zum Maschinengestell 17 dargestellt. Die Förderelemente sind zwecks besserer Übersichtlichkeit weggelassen. Die erfindungsgemäße Vorrichtung wurde zum besseren Verständnis auf die wesentlichen Teile, nämlich Rahmen 7, Maschinengestell 17 und Drehpunkt 15 beschränkt. Der Rahmen 7, in welchem, wie oben bereits beschrieben, die Förderelemente 1, 1', 8 8' gelagert sind, ist im Auslaufbereich 16 um einen Drehpunkt 15 drehbar. Eine Drehung um den Drehpunkt 15 führt im Einlaufbereich 20 zu einer Schwenkbewegung 19 des Rahmens und somit zu einer Schwenkbewegung der Förderachse 18, 18'. Hierdurch wird die Einleitung des Drehvorgangs begünstigt, ohne dass Positionskorrekturen von Transportelementen in nachfolgenden Sektionen vorgenommen werden müssen.

## Patentansprüche

1. Vorrichtung zum Drehen flacher Gegenstände (3), insbesondere von Faltschachtelzuschnitten, mit
- Förderelementen (1, 1', 8, 8'), die mindestens zwei luftdurchlässige Förderstrecken (2, 2') bilden und auf denen die Gegenstände (3) flach liegend gefördert werden, wobei die Förderelemente in einem Rahmen (7) gelagert sind,
- einer von unten durch die Förderstrecke wirkenden Saugeinrichtung (9) zur Erhöhung der Reibung zwischen den Förderelementen (1, 1', 8, 8') und den Gegenständen (3) und
- je einem separaten Antrieb für die Förderelemente der jeweiligen Förderstrecke (2, 2')
**dadurch gekennzeichnet,**
**dass** der Rahmen (7) um einen Drehpunkt (15) im Auslaufbereich (16) der Vorrichtung schwenkbar bezüglich eines Maschinengestells (17) gelagert ist.

2. Vorrichtung nach Anspruch 1,
**dadurch gekennzeichnet,**
**dass** die Förderelemente (1, 1', 8, 8') Saugbänder (8, 8') sind.

3. Vorrichtung nach Anspruch 1,
**dadurch gekennzeichnet,**
**dass** die Förderelemente (1, 1', 8, 8') Förderrollen (1, 1') sind.

4. Vorrichtung nach einem der vorhergehenden Ansprüche,
**dadurch gekennzeichnet,**
**dass** eine Verschwenkung des Rahmens (7) um den Drehpunkt (15) über eine Steuerung und einen Antrieb automatisch in Abhängigkeit von der Zuschnittform eingestellt wird.

## Claims

1. Device for rotating flat objects (3), in particular folding box blanks, including
- conveying elements (1, 1', 8, 8') that form at lest two conveying lines (2, 2') permeable to air and on which the objects (3) are conveyed lying flat, the conveying elements being supported in a frame (7),
- a suction device (9) acting from below through the conveying line to increase friction between the conveying elements (1, 1', 8, 8') and the objects (3), and
- a respective separate drive for the conveying elements of the respective conveying line (2, 2'),
**characterized by**
the fact that the frame (7) is supported to swivel relative to a machine frame (17) about a swivel point (15) in the exiting region (16) of the device.

2. Device according to Claim 1,
**characterized by**
the fact that the conveying elements (1, 1', 8, 8') are suction belts (8, 8').

3. Device according to Claim 1,
**characterized by**
the fact that the conveying elements (1, 1', 8, 8') are conveying rollers (1, 1').

4. Device according to one of the preceding claims,
**characterized by**
the fact that a swivelling of the frame (7) about the swivel point (15) is set automatically as a function of the shape of the blank using a control and a drive.

## Revendications

1. Dispositif pour la rotation d'objets plats (3), en particulier de découpes de boites pliantes, avec
- des éléments de transport (1, 1', 8, 8') qui forment au moins deux trajets de transport perméables à l'air (2, 2') et sont lesquelles sont transportés les objets (3) à plat, les éléments de transport étant logés dans un cadre (7),
- un dispositif d'aspiration (9) agissant par le bas à travers le trajet de transport pour augmenter la friction entre les éléments de transport (1, 1', 8, 8') et les objets (3), et
- respectivement un entraînement séparé pour les éléments de transport de trajet respectif de transport (2, 2'), **caractérisé en ce que** le cadre (7) est logé autour d'un point de rotation (15) dans la zone de sortie (16) du dispositif pivotant par rapport à un bâti de machine (17).

2. Dispositif selon la revendication 1, **caractérisé en ce que** les éléments de transport (1, 1, 8, 8') sont des bandes aspirantes (8, 8').

3. Dispositif selon la revendication 1, **caractérisé en ce que** les éléments de transport (1, 1', 8, 8') sont des galets de transport (1, 1').

4. Dispositif selon l'une des revendications précédentes, **caractérisé en ce qu'**un basculement du cadre (7) est réglé automatiquement autour du point de rotation (15) par une commande et un entraînement en fonction de la forme de découpe.
